# EUROPEAN PATENT APPLICATION

(11) **EP 1 523 204 A1**
(43) Date of publication of application: **13.04.2005**
(21) Application number: 04256000.3
(22) Date of filing: 29.09.2004
(51) Int. Cl.: H04Q 7/32

(54) **Automatic updating of non-emergency telephone numbers for wireless handset**

(30) Priority: 10.10.2003 US 683715
(71) Applicant: Lucent Technologies Inc., Murray Hill, NJ 07974-0636 (US)
(72) Inventor: Benco, Davis S., Winfield Illinois 60190 (US); Overend, Kevin J., Elmhurst Illinois 60126 (US); Sheen, Baoling S., Naperville Illinois 60565 (US); True, Sandra L., St. Charles, IL 60175 (US); Voight, Kenneth J., Sugar Grove, IL 60554 (US)
(74) Representative: Watts, Christopher Malcolm Kelway, Dr.

(57) **Abstract**

A method in the wireless infrastructure automatically keeps wireless handsets updated with a non-emergency telephone number, e.g. roadside assistance, which is appropriate for the current location of the subscriber. This number is stored in memory of the handset and is preferably made easily accessible by the subscriber. The location of the wireless handset is monitored and if the subscriber moves to a location that requires the use of a non-emergency number that is different from the non-emergency number currently stored in the handset, the new non-emergency number is determined and transmitted to the handset that updates its non-emergency number stored in its memory.

## Description

### Background

This invention relates generally to wireless telecommunications and more specifically relates to a method for updating a wireless handset with information that depends on the geographic location of the handset.

One significant reason why people subscribe to a wireless telecommunications service, e.g. a cellular telephone service, is to be able to call for emergency help and for non-emergency roadside assistance. The telephone number 911 has been standardized in the United States as the number to call for emergency assistance from a landline telephone. The telephone number to call for emergency assistance from a wireless telephone is becoming more standardized in many states, e.g. *911. However, the telephone number to call for non-emergency roadside assistance varies from state-to-state and may also vary with the wireless service provider. If a subscriber calls the emergency number with a non-emergency request such as non-emergency car trouble such as a flat tire, the dispatcher may tell the subscriber to call information to find the number for roadside service or towing in the area. This can be time-consuming and further add to the existing frustration being experienced by the subscriber. Thus, there exists a need to provide a wireless subscriber with the ability to easily initiate a telephone call to the appropriate party for non-emergency assistance, e.g. roadside help.

### Summary of the Invention

It is an object of the present invention to provide a solution for this need.

In accordance with an embodiment of the invention, a method in the wireless infrastructure automatically keeps wireless handsets updated with a non-emergency telephone number, e.g. roadside assistance, which is appropriate for the current location of the subscriber. This number is stored in memory of the handset and is preferably made easily accessible by the subscriber. The location of the wireless handset is monitored and if the subscriber moves to a location that requires the use of a non-emergency number that is different from the non-emergency number currently stored in the handset, the new non-emergency number is determined and transmitted to the handset that updates its non-emergency number stored in its memory. The updated non-emergency telephone number is preferably easily dialed by the subscriber such as by assigning a key on the wireless handset to dial the non-emergency number or having the non-emergency telephone number associated with a predetermined key sequence, e.g. *77.

### Brief Description of the Drawings

Figure 1 is a block diagram illustrating a wireless telecommunications system suited for incorporating an embodiment of the present invention.
Figure 2 is a flow diagram illustrating a method in accordance with an embodiment of the present invention.
Figure 3 is a flow diagram illustrating a method in accordance with another embodiment of the present invention.

### Detailed Description

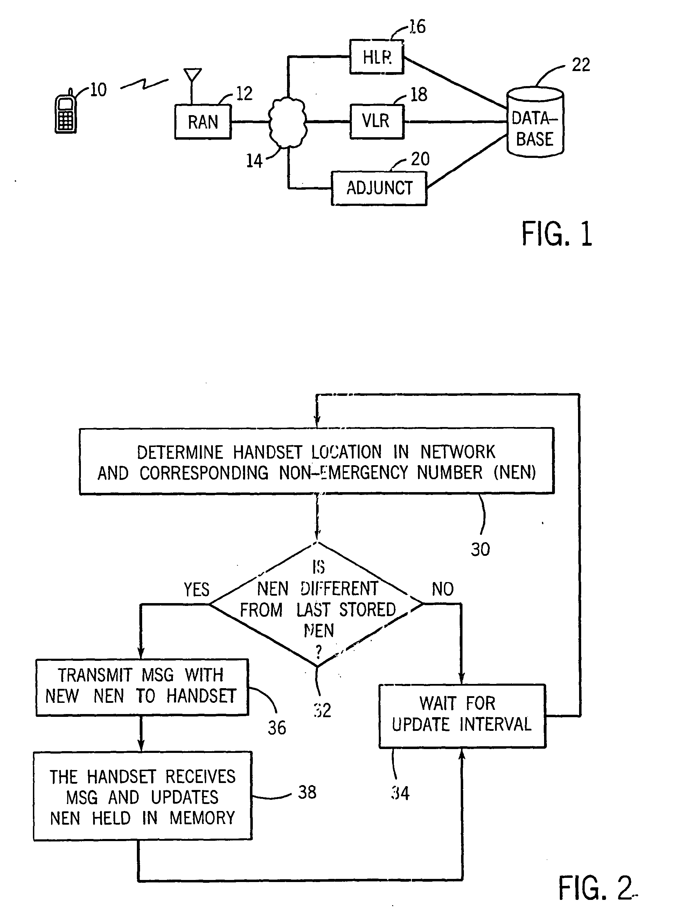

Figure 1 illustrates a wireless telecommunication system suited for incorporating an exemplary method in accordance with the present invention. A wireless handset 10, which may comprise a cellular telephone or any other type of portable two-way communication device that supports user communications, is supported by wireless infrastructure equipment. In the illustrative embodiment, handset 10 is a cellular telephone with wireless communications supported by radio access node (RAN) 12 that may comprise a base station that supports radio frequency two-way communications and a mobile switching center that switches calls between handsets supported by RAN 12 and the wired telecommunication system.

A telecommunication transmission network 14 supports the transmission of messages and command signals as well as end-user calls between RAN 12 and a home location register (HLR) 16, a visitor location register (VLR) 18 and an adjunct device 20 that could comprise a service control point. The HLR 16 serves as the primary point of registration for a wireless handset and facilitates a variety of administration and control functions associated with the handset such as authentication, billing, etc. The VLR 18 cooperates with the HLR and serves as a point of registration for handsets that are served by portion of the wireless network remote from the HLR. The adjunct 20 can be configured by the system administrator to provide a variety of services and features for subscribers. The adjunct 20 normally operates under software controlled instructions and can initiate and control a variety of call services and functions based on predetermined inputs such as events or conditions. In one embodiment of a method of the present invention that will be described in detail below, the adjunct 20 serves as a primary facilitator for supplying handset 10 with updated non-emergency telephone numbers.

A database 22 may be coupled to the HLR 16, VLR 18 and adjunct 20. In addition to storing typical records and data that are required to be temporarily or permanently stored during the operation of the wireless telecommunication system, the database 22 may also store information utilized in implementing methods in accordance with the present invention.

Figure 2 illustrates a flow diagram of a first embodiment of a method in accordance with the present invention. As used herein, a "handset" refers to the physical device utilized for communications and a "subscriber" refers to the person using a handset for communications. In step 30 a determination of the location of the handset used by the subscriber is made and a corresponding non-emergency number (NEN) is determined based on that location. A variety of known techniques exist for determining the location of a wireless handset. For example, the handset may be equipped with a global positioning satellite (GPS) receiver that can be utilized to obtain latitude and longitude coordinates, and transmit these coordinates to the wireless infrastructure equipment. Known wireless triangulation and signal strength measurements can also be utilized to determine the location of handsets. The general location of a handset can also be determined based on the current base station supporting the handset, i.e. the handset will be somewhere within the coverage area supported by the supporting base station. In accordance with this first embodiment, information as to the location of the handset is maintained in HLR 16 where this information is stored in a record associated with the handset in database 22. Also preferably stored in database 22 is a table of non-emergency telephone numbers and the geographic region associated with each of the non-emergency numbers. This table, which should not change on a frequent basis, may be maintained by the wireless system administrator. In accordance with this first embodiment, adjunct 20 is responsible for maintaining a correlation between the location of handset and the non-emergency number that serves the location. On initial registration of the handset, the HLR 16 can transmit a message to the adjunct 20 identifying a newly registered handset. In response, the adjunct 20 can query the database 22 to determine the location of handset and initiate a further query of the table in the database to determine the appropriate non-emergency number to be utilized from the current location of the handset.

In step 32 a determination is made of whether the most recently determined NEN to be used by the handset is different from the last NEN that is stored in the record associated with the handset. Preferably, the information defining the location on the handset is periodically updated. The frequency of the updates can be based on predetermined time intervals and/or may be event driven such as by a handoff of the handset from one base station to another base station. The adjunct 20 can utilize an internal timer to implement the predetermined time intervals. With respect to event driven location updates, the adjunct 12 will receive notifications of such events that will in turn cause the adjunct 20 to perform a determination of whether a NEN update is required. A NO determination by step 32 means that there is no need to provide an updated NEN to the handset. Accordingly, the NO determination causes the adjunct 20 to wait for an update interval and/or event in accordance with step 34. Following step 34, the process returns to making a new NEN determination at step 30.

A YES determination by step 32 means that the recently determined NEN is different from the previous NEN and that the handset should be updated with the current NEN to be utilized for non-emergency calls. In step 36 the adjunct 20 transmits a message to the handset 10 wherein the message consists of a command recognized by the handset to store the NEN contained in the message in place of the previously stored NEN. In step 38 the handset receives the message and updates the NEN held in its memory with the NEN contained in the message. This updating process does not require any action or interaction on the part of the subscriber. The subscriber may be advised of the update of the NEN such as by temporarily displaying the updated NEN on the screen of the handset. Alternatively, the updating process can be completed without the subscriber being notified. Following step 38, the process continues to step 34 to await another interval and/or event to occur in order to make another determination of whether a new NEN is to be used.

Various alternatives to the first embodiment will be apparent to those skilled in the art. The following alternatives are offered by way of example and are not intended to represent all alternatives. Instead of the adjunct 20 having to query the database to determine the location of the handset, HLR 16 could transmit a message to the adjunct 20 that would identify a handset with a change location and include the new location information. Although adjunct 20 is shown as a separate element, the functionality performed by the adjunct could be incorporated into existing network elements such as into HLR 16 or VLR 18.

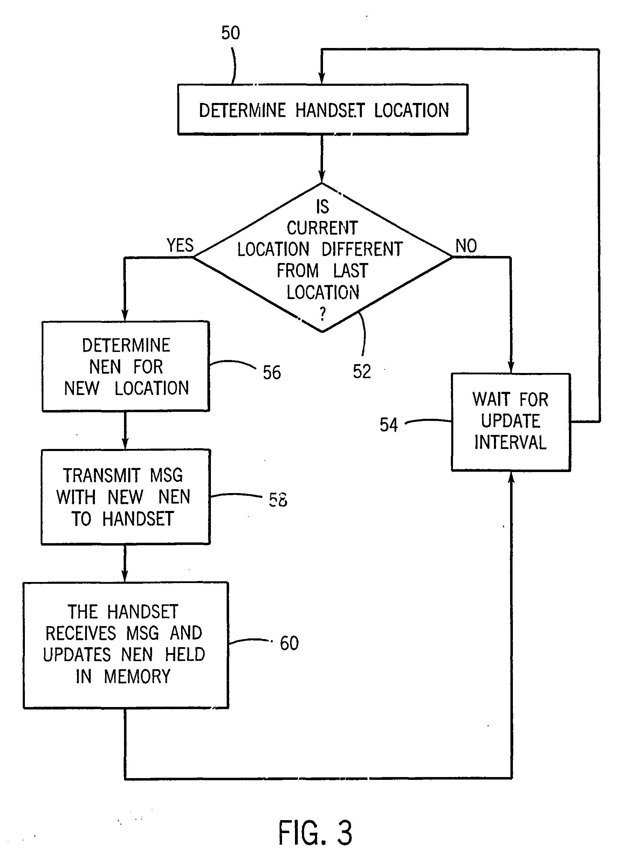

Figure 3 illustrates a second exemplary method in accordance with the present invention. This method is similar to the method of the first embodiment, but a non-emergency number is not determined unless the current location of the handset is different from its last location. This method will be explained with fewer details than the first method since further implementation aspects and alternatives will be apparent to those skilled in the art in view of the explanation provided for the first embodiment. In step 50 the location of the handset is determined. In step 52 a determination is made of whether the current location of the handset is different from its last location. A NO determination by step 52 results in the process waiting for a new update interval as indicated at step 54. Upon the update interval having been satisfied, the process returns to step 50.

A YES determination by step 52 causes a determination to be made of a new NEN corresponding to the new location at step 56. In step 58 a message is transmitted to the handset that contains the new NEN. In step 60 the handset receives the message that is interpreted as a command and updates the NEN held in its memory. Following step 60 the process returns to step 54 to wait for a new update interval.

The second embodiment could be modified in order to minimize the number of messages required to be sent to the handset by causing a further determination to be made following a YES determination by step 52. More specifically, an additional determination (not shown) could be made to determine if the new location gives rise to a new NEN prior to the transmitting of the message as per step 58. This could reduce the number of updates, i.e. messages, to be sent to the handset since it will be apparent that not every change in location will necessarily give rise to a different NEN. For example, a city or geographic region may be served by a single non-emergency assistance number so that a change in location of the subscriber within the city or geographic region would not give rise to a need to update the existing NEN with a new updated NEN.

Although embodiments of the invention have been described above and shown in the accompanying drawings, various changes and modifications to the embodiments can be made within the scope of the invention that is defined by the claims which follow.

## Claims

1. A method for automatically updating a non-emergency telephone number stored in a wireless handset comprising the steps of:
determining a previous non-emergency telephone number corresponding with a prior location of the wireless handset;
storing the previous non-emergency telephone number in a record associated with the wireless handset in a network database;
determining a current location of the wireless handset;
determining a first non-emergency telephone number corresponding to the current location where the first non-emergency telephone number is to be used by wireless handsets at the current location to seek non-emergency assistance;
comparing the first non-emergency telephone number and the previous non-emergency telephone number;
if the first non-emergency telephone number is different than the previous non-emergency telephone number, transmitting a message containing the first non-emergency telephone number to the wireless handset where the message is a command for the wireless handset to store in its memory the first non-emergency instead of the previous non-emergency telephone number for access by a user of the wireless handset.

2. The method according to claim 1 wherein the step of determining the corresponding first non-emergency telephone number comprises accessing a database based on the current location of the wireless handset where the database stores non-emergency telephone numbers for different locations.

3. A method for automatically updating a non-emergency telephone number stored in a wireless handset comprising the steps of:
determining a prior location of the wireless handset;
determining a current location of the wireless handset;
if the current location is different from the prior location:
determining a non-emergency telephone number to be employed by a user of the wireless handset while at the current location; and
transmitting a message containing the non-emergency telephone number to the wireless handset where the message is a command for the wireless handset to store in memory the non-emergency instead of a previous non-emergency telephone number for access by a user of the wireless handset of non-emergency services.

4. The method according to claim 3 further comprising the steps of storing in a network database the prior location in a record associated with the wireless handset, and comparing the prior location with the current location.

5. The method according to claim 3 further comprising the steps of determining whether the current non-emergency telephone number corresponding to the current location is different from the prior non-emergency telephone number corresponding to the prior location, and transmitting said message only if the current non-emergency telephone number differs from the prior non-emergency telephone number.
